# EUROPEAN PATENT SPECIFICATION

(11) **EP 2 237 681 B1**
(45) Date of publication and mention of the grant of the patent: **11.04.2018**
(21) Application number: 08862256.8
(22) Date of filing: 05.12.2008
(51) Int. Cl.: A23P 20/12, A23P 20/10, A23L 7/117, A23P 10/20, A23L 7/122

(54) **AIR CURRENTS FOR COATING A FOOD CORE**
LUFTSTRÖME ZUR BESCHICHTUNG EINES LEBENSMITTELKERNS
COURANTS D'AIR UTILISABLES EN VUE DU REVÊTEMENT DU NOYAU CENTRAL D'UN ALIMENT

(30) Priority: 17.12.2007 US 14082
(43) Date of publication of application: 13.10.2010
(73) Proprietor: The Quaker Oats Company, Chicago, IL 60661 (US)
(72) Inventor: MOORE, Gary S., Johnsburg Illinois 60051 (US); ABU-ALI, Jareer, Bakersfield California 93311 (US)
(74) Representative: Jenkins, Peter David
(86) International application number: PCT/US2008/085701
(87) International publication number: WO 2009/079239

(56) References cited:
- EP-A- 0 865 740
- EP-A- 1 844 662
- WO-A-91/09989
- WO-A-2006/028450
- US-A1- 2006 204 625

## Description

### FIELD OF THE INVENTION

The present invention relates generally to food products with coatings and methods for forming coated food products.

### BACKGROUND OF THE INVENTION

To rapidly bring to market foods that satisfy a variety of consumer needs and wants requires that companies have the flexibility to efficiently develop and implement a wide spectrum of food product designs. Convenience products, such as easy-to-eat snacks, are in high demand in today's fast paced environment. Furthermore, consumers vary in what they look for in convenience products. For example, some consumers may prefer savory products, other consumers prefer sweet products, others seek out nutritional products, and others desire performance-enhancing products. To meet the ever-evolving desires of today's consumer, in today's competitive environment, where vast combinations of flavors, textures, shapes, sizes, and nutritional profiles are just some of the variables to consider, food product developers and engineers try to find common technological platforms useful to make a variety of products.

One platform useful to design a wide range of food products is the use of coatings, applied to, or combined with, additional food components. Such coatings can function to hold together other food pieces or components, or provide additional interest or value to the food product. If a coating is fat-based, for example, it is typically heated to a temperature where it is liquid or semiliquid. The coating can then be applied to a core food piece. After the coating has been applied, additional components, such as particulates (e.g., grains or granola) can be added to encrust the core. In other words, the coating can function as an adhesive medium, holding the particulate to the core.

Additionally, many consumers today seek out healthy and wholesome foods, such as cereal-based or natural food products. Parents, in particular, are concerned with their children eating healthy snacks. Therefore, there is a need for a variety of snack forms, including those that provide nutritional value, and manufacturing methods that can allow improved capabilities and flexibility to make a variety of interesting snack formats, combining different food components.

Manufacturers have attempted to produce healthy snacks which are more interesting to eat. For example, some snacks include an outer coating of particulates such as chopped nuts, cereal, granola or fruit pieces for enhanced palatability or visual appeal. However, conventional techniques for coating snacks with particulates have been ineffective or inefficient.

One static manufacturing technique for example, involves dropping particulates from a feeder over a core food piece and then transferring the encrusted food core directly to a cooling tunnel. Since the core is stationary on the conveyer belt, the particulates are never exposed to the bottom of the core. This results in a core that is incompletely coated with particulates (*i.e.* this process creates a visible "foot"). Another problem with this method is that the particulate to coating bond strength is low because the particulate is only resting on the surface, rather than imbedded into the coating. Therefore, this method results in low particulate encrusting levels and low adhesion of the particulates to the core.

Another manufacturing technique utilizes a tumble drum and involves dropping particulates from a feeder over a core piece and then transferring the core and particulates directly to a tumble drum for encrusting. The tumble drum rotates and causes the particulates to adhere to a core piece. However, this technique becomes problematic when an irregularly shaped core is used. The particulates do not completely cover an irregularly shaped food core because the particulates are not colliding with the core from all directions. Additionally, for delicate products the current tumble drum technology causes undesirably high product breakage.

Conventional methods also lack a means for controlling the temperature of the encrusting process. Therefore, the steps of coating and encrusting must occur in immediate sequential order, while the coating compound is still at its sticky or tacky temperature. Additionally, conventional methods result in poor adhesion of a particulate to the core food piece. This is because existing food coating technology doesn't rely on high collision forces between the particulate and the food core.

WO 91/09989 relates to a method for applying a hard coating on cores of adible or chewable material and coated material obtained by the method.

US 2006/0204625 relates to adherence of temperature sensitive inclusions on edible lightweight cores.

WO 2006/028450 relates to a method and apparatus for uniformly adding particulates to a coating on comestibles and products produced thereby.

EP1844662 relates to improved tumble drum design and method for coating objects.

EP 0 865740 relates to a coated food product and process for the preparation thereof.

It would be advantageous to have improved manufacturing capabilities and flexibility to make coated food products.

### SUMMARY OF THE INVENTION

In one aspect, there is provided a process of creating a particulate encrusted food core having characteristics that enable the particulates to attach to its surface, comprising: exposing a food core and a plurality of particulates to air currents in a fluidized bed apparatus, wherein the air currents cause the particulates to collide with the food core and adhere, creating a particulate encrusted food core, wherein the food core is heavier than the particulates and the food core is not fluidized.

In another aspect, there is provided a process of creating a particulate encrusted food core, comprising: exposing a food core and a plurality of particulates to air currents in a fluidized bed apparatus, wherein the air currents cause the particulates to collide with the food core and adhere, creating a particulate encrusted food core; further comprising coating a food core with a coating compound before exposure to the particulates, creating an at least partially coated food core, or coating a particulate with a coating compound before exposure to the food cores, creating an at least partially coated particulate, wherein the food core is heavier than the particulates and the food core is not fluidized.

In another aspect, there is provided a process of creating a particulate encrusted food core, comprising the steps of: (i) coating a food core or a plurality of particulates with a coating compound; (ii) heating the food core or the particulates to a temperature sufficient to allow the particulates to adhere to the food core; (iii) exposing the food core and the particulates to air currents in a fluidized bed apparatus, wherein the air currents cause the food core and the particulates to collide, creating a particulate encrusted food core; and (iv) cooling the particulate encrusted food core, wherein the food core is heavier than the particulates and the food core is not fluidized.

The description further provides an encrusted food core. The encrusted food core is formed by exposing a food core and a plurality of particulates to air currents. The air currents cause the particulates to collide with the food core and adhere.

### BRIEF DESCRIPTION OF DRAWINGS

FIGS. 1a-b displays coated food products in accordance with embodiments of the invention.
FIG. 2 displays a process flow chart for forming a coated food product in accordance with one embodiment of the invention.
FIG. 3 displays an exemplary processing line for forming a coated food product in accordance with one embodiment of the invention.
FIG. 4 displays a fluidized bed apparatus in accordance with one embodiment of the invention.

### DETAILED DESCRIPTION OF THE INVENTION

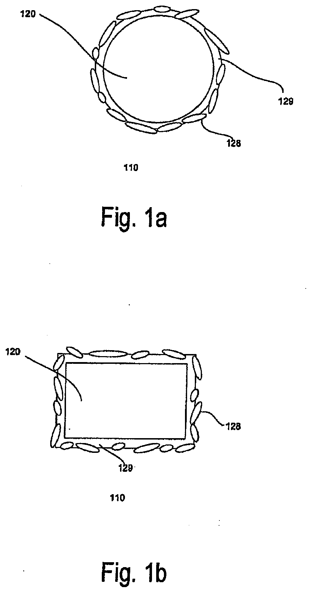

The present invention is directed to processes for making coated food products. FIGS. 1a-b show coated food products 110 made in accordance with embodiments of the invention. The food product comprises a base or core 120 having an outer coating of particulates 128. A food product that is to be encrusted with an outer coating of particulates is referred to as a "food core." An advantage of the present invention is that the process is able to encrust food cores of many different shapes, including irregular shapes. The food core, for example, can comprise a spherical or rounded shape, as shown in FIG. 1a. A square or rectangular-shaped core, as shown in FIG. 1b, is also useful. By way of example only, an irregularly shaped food core may be shaped like popcorn, or a uniform but difficult to coat shape like a donut, a pretzel, a toy jack, or a 3-D star. The core can also have other irregular or geometric shapes, such as pyramidal or polygonal.

The food core can be formed from various types of ingredients and may include different types of textures. Any type of food piece can serve as a food core. The core can be adhesive by itself or coated with an adhesive. The core can be solid or non-solid. For a non-solid core, it can be filled or unfilled. The core can be soft (including liquid), hard or intermediate in hardness. For example, the core can be formed from an extruded food piece, a chewy granola bar, a granola cluster, cereal, puffed-rice, pretzel twist, nuts, pretzel nugget, animal cracker, cookie, confectionary, wafer, dried fruits, gum, candy sphere, fruit filled cookie, popcorn, or a combination thereof. Other types of ingredients can also be used to form the core. Semi-solids or fluids can also be used for the core, for example, jellies, jams, sugar syrups.

Covering the food core are numerous pieces of particulates 128. It is understood that the particulates need not completely encrust the core. The degree or amount of coverage can be varied, depending on the application. However, it may be preferred to substantially encrust, rather than partially encrust the core.

The particulates can impart different textures, flavors or coloring to the core, making it interesting and fun to eat. In one embodiment, the particulates comprise a crunchy texture. Other textures, such as chewy, soft, gummy or moist are also useful. A combination of textures, colors and/or flavors can be provided by the particulates. This can be achieved by, for example, using a combination of different types of particulates. The particulates may comprise grains or mixtures of grains such as granola-type mixtures, groats, whole grain wheat flakes, or coated rolled oats. The particulates may also be puffed-rice, crisp rice, whole wheat flour, cheese powder, whey, seasonings, cereal pieces such as crushed cereal flakes, crushed cookie pieces, chopped nuts, small pieces of dried fruit, small pieces of dried chopped or shredded vegetables, or a combination thereof.

The particulates can have different sizes and shapes. In one embodiment, the particulates are substantially smaller than the core. The size of the particulates may be from 0.079 cm to 0.635 cm (1/32" to 1/4"). However, particulates smaller or larger than this range may be used. Other sizes may also be useful depending on the application.

A coating compound can be applied to the core creating a coating layer 129. In one aspect, the coating compound may be applied to the core through the use of an enrober. The coating compound may also be applied to the core with the use of a continuous mixer, a batch mixer, a panner, a belt coater, a stringer, or a spray nozzle. The coating layer provides a surface on which the particulates adhere. The coated food core may be heated to a temperature sufficient to allow the coating layer of the food core to become adhesive. The food core may become more adhesive by raising the temperature to melt or slightly melt the coating layer so it becomes less solid and more adhesive or sticky. Alternatively, the food core can be coated with an adhesive that does not require heating to adhere to a food core. Once the particulates are encrusted on the coating layer, the encrusted food core is cooled or dried and cooled to solidify the coating layer, securing the particulates in place.

It may be preferred to heat the coating compound to a temperature referred to as the sticky or tacky temperature. The sticky or tacky temperature is the temperature at which the coating compound becomes adhesive, sticky or tacky, and is typically above the normal storage temperature (e.g., room temperature) of the food product. The sticky temperature can be related to the melting temperature (Tₘ) or the glass transition temperature (T_{g}) of the coating compound, depending on the composition of the coating compound.

The coating compound comprises, in one embodiment, a chocolate coating. Other types of coatings, such as coatings comprising amorphous solid constituents, including amorphous carbohydrates (e.g., sugar, starches), are also useful. Coating compounds may also be composed of carbohydrate syrups or hydrocolloid syrups. Additional ingredients, for example, flavorings, sweeteners, colors, fibers, vitamins and minerals, may be added to the compound coating, as desired.

Alternatively, the coating layer can be omitted for cores having characteristics that enable the particulates to attach to its surface. For example, the core may have a temperature at which its surface would become adhesive, sticky or tacky. This allows the particulates to be encrusted directly to the core at an elevated temperature above its sticky temperature and subsequently cooled, solidifying the core to cause the particulates to be embedded therein. Such cores include, for example, gummy confectionary cores, sugar-based cores or other types of suitable cores.

Other types of food product designs are also useful. For example, the food product may comprise multiple coating layers and/or multiple layers of particulates. For example, the food product described in Fig. 1a, can be made with a final dusting of powdered sugar. Alternatively, an additional layer of compound coating can be included in the food product. One embodiment involves the process being repeated numerous times to have a plurality of coating layers each encrusted with a different particulate. The choice of the types and number of coating and particulate layers will depend on the product design.

In one embodiment, the core comprises a puffed core formed from whole grain. The puffed core may be formed from multigrain, such as whole corn, whole wheat, oat and brown rice, or cereals. In one embodiment, the diameter of the core may be 0.635 cm to 2.54 cm (1/4" to 1") A coating compound, such as a chocolate compound may be disposed on the core creating a coating layer. The coating layer may include flavoring ingredients such as chocolate, peanut butter or cinnamon. Other flavors may also be employed. Particulates comprising granola formed from oats are fixed to the coating layer. The bite-sized snack is wholesome and has a crunchy texture. This creates a snack that is fun and attractive to eat, especially to children.

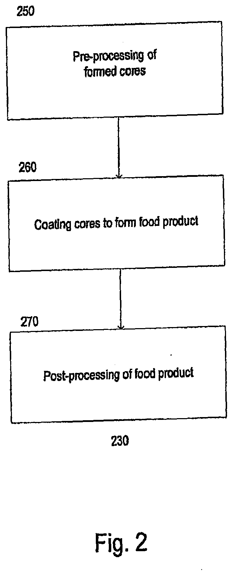

Fig. 2 shows a process flow 230 for forming a coated food product in accordance with one embodiment of the invention. At step 250, pre-processing, which includes providing the core of the food product, is conducted. Any type of coatable food piece can be provided as the food core. The cores can vary in shape and size. An advantage of the present invention is that cores of a wide variety of shapes and sizes, including irregularly shaped cores, can be effectively coated.

After the core is provided, it is prepared for coating with particulates. In one embodiment, the core is pre-coated with the food compound coating using an enrober. Temperatures of the pre-coating will vary depending on, for example, the composition of the coating compound. The temperature may be above the compounds melting point to give the compound an appropriate consistency for enrobing the core. The core can be completely covered, substantially covered or only partially covered with the coating compound.

The encrusting may be performed in a fluidized bed apparatus. The fluidized bed apparatus may comprise a closed or open chamber. The particulates are fluidized (suspended in air or gas and circulated in different directions) within the chamber. Fluidization of the particulates is caused by air currents within the chamber. The air currents causing the particulates to fluidize allow for improved collision forces between the core and the particulate. The improved collision forces result in improved adhesion of particulates to the core. The air currents are controlled to cause the lighter particulates, but not the heavier cores, to fluidize. However, because of the air currents, the food cores may bounce or roll around within the chamber. This is advantageous because it ensures that all sides of the core are exposed to the fluidized particulate.

In one embodiment of the invention, irregularly shaped food cores can be substantially encrusted with particulates. The fluidized particulates are circulated in all directions in three dimensional space while the core pieces roll and bounce on the bottom of the apparatus. This allows complete encrusting of the irregularly shaped core. Irregularly shaped cores are extremely difficult to substantially encrust with particulates using conventional methods. However, the use of air currents places the particulates in the many "hard to reach" locations of an irregularly shaped food core.

The use of air currents results in the most efficient encrusting of particulates on the food core. In one embodiment, the chamber is heated to a coating temperature by controlling the temperature of the air currents. The coating temperature is at or above the sticky or tacky temperature of the coating compound. Preferably, at the coating temperature, the coating compound is of a suitable consistency to allow particulates to adhere to the core. Other temperatures may also be useful, depending on the characteristics of the coating layer. The circulating particulates collide with the core and become embedded in or attached to the coating layer, thereby encrusting the core.

As discussed above, the food core can be coated with a coating compound. When the coated food core enters the heated chamber, the coating compound is heated to a temperature which allows the coating layer to become adhesive. The food core may also be comprised of a material that becomes semi-solid and adhesive when heated to the encrusting temperature.

Alternatively, the particulate can be composed of a material that when heated becomes semi-solid. When the particulate is exposed to the heated air currents, the particulate becomes semi-solid and adhesive and can adhere to the food core. In another aspect, the particulate can be coated with a coating compound or an adhesive. When the coated particulate is exposed to heat, the particulate becomes adhesive and can adhere to the food core.

In another aspect, just prior to entering the heated chamber, a liquid or semi-solid adhesive may be deposited (dripped, sprayed, etc.) into the bed of particulates. When the coated particulates and food cores enter the heated air chamber, the particulates become adhesive and the heated air currents cause fluidization of the particulates, leading to encrusting of the particulate to the food core.

After the core is sufficiently coated, it is post-processed at step 270. Post-processing comprises cooling or drying and cooling the coated food product sufficiently for the coating layer to harden, holding the particulates in place. Final processing may also include packaging and labeling for storage or shipment.

The processing steps need not occur in the order as described. In fact, one additional advantage of the present invention is that the coating process allows high flexibility in the production of the food products. The fluidized coating process can easily be stopped and resumed after, for example, additional processing steps. Flexible processing is also useful when responding to unexpected manufacturing situations. Cores that have been partially coated can be easily removed from the fluidized bed apparatus when a coating process is stopped before completion, or re-filled into the fluidized bed apparatus upon resuming a process started earlier. Additionally, the fluidized coating step can be separated from other processing steps, such as the enrobing step. For example, the cores may be coated with a coating compound at one facility or location, and transported to the fluidized bed in another facility for encrusting with particulates. This flexibility is the result of using temperature controlled air currents for the encrusting steps. For example, a pre-coated core can be re-heated to the sticky or tacky temperature while being encrusted with particulates. This is not possible with conventional methods.

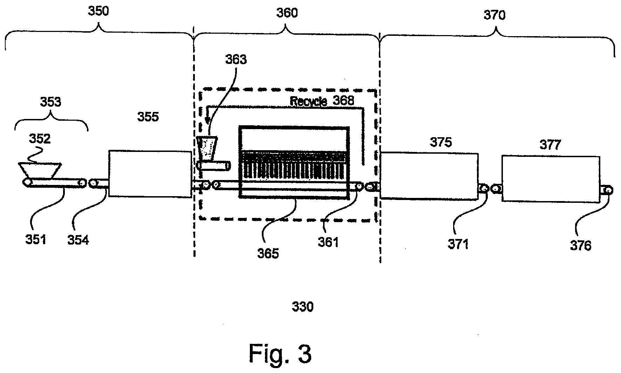

Fig. 3 shows a processing line 330 for making a coated food product in accordance with one embodiment of the invention. The processing line is divided into various segments. In one embodiment, the processing line is divided into pre-processing 350, encrusting 360, and post-processing 370 segments. It should be understood that the segments could be even further divided into sub-segments or sections for different types of processing within each segment. The segments can operate independently, in both time and space.

The pre-processing segment is used to prepare formed cores for particulate coating. In one embodiment, the pre-processing segment comprises a core feeder 353 and a coater 355. The core feeder, for example, includes a hopper 352 and an automated transporter 351. In one embodiment, the automated transporter comprises a conveyor belt. The conveyor belt can have, for example, belts that are solid or belts that have gaps or slots that allow removal of broken pieces of the food core. The belt can be made from wire, metal, rubber or polymeric materials. Additionally, the belt can have sectioned walls for carrying materials upwards, or belts that move at different speeds. Other types of automated transporters are also useful.

Formed cores are passed to the coater by the automated transporter 351. The coater, in one embodiment, comprises an enrober 355 which coats the formed cores with a coating compound, providing a coating layer. Various conventional types of enrobers can be employed. For example, the Sollich MINICOATER™ with 320 or 420 mm belt width or the ENROMAT M5™ with 2600 mm belt width may be used with the present invention. In another example, a Hayes & Stolz EZ Blender with a 23 cm (9") diameter by 244 cm (8') long mixing screw may be used with the present invention. Other types of coaters, such as coating systems that drizzle or spray the coating layer onto the cores, may also be useful. An automated transporter 354, such as a conveyor belt, is provided to move the prepared cores out of the pre-processing segment.

In one aspect, a fluidized bed apparatus 365 is used for encrusting the prepared cores with the selected particulates. In one embodiment, the fluidized bed apparatus is a Jetzone Fluidized Bed Dryer manufactured by CPM Wolverine Proctor. Other types of fluidized bed dryers can also be used. Particulates from feeder 363 are fluidized by the air currents of the fluidized bed apparatus. The fluidized bed apparatus may be 183cm (6') Long x 38 cm (1.25') Wide for small scale applications or 610 cm (20') Long x 122 cm (4') Wide for production scale applications. However, various sizes may be employed depending on the production needs. A conveyer belt 361 transports prepared cores through the fluidized bed apparatus 365 and removes the encrusted food products from the fluidized bed apparatus. Alternatively, a vibratory conveyor or any other style of solid bed conveyor can also be used to transport prepared cores through the fluidized bed apparatus.

Excess particulates from the coated food products can be recycled 368 by loading them back into the feeder. A screening system may be employed for this purpose. Many types of screening systems may be used with the present invention. In one embodiment, the screening system may be incorporated into the conveyer belt system. A screening conveyer belt may have gaps or slits built into the belt to allow excess particulates to fall through the bottom, leaving only the encrusted food core on the surface of the belt for transport to post-processing 370. This type of conveyer belt (not shown) would preferably be located directly downstream of fluidized bed apparatus 365 and could be connected directly to conveyer belt 361 to allow the encrusted cores to pass from conveyer belt 361 directly to the screening conveyer belt, to allow for the removal and recycling of excess particulates. The screening apparatus could also be located after optional dryer 375 or cooling tunnel 377.

Depending on the type of coating the post-processing segment comprises, for example, one dryer and one cooling tunnel. As shown, one dryer 375 and one cooling tunnel 377 are provided. Conveyor belts 371 and 376 are provided to move the coated food product through the post-processing equipment. Drying may occur at a variety of temperatures. Drying temperatures just above the boiling point of water (100 C at sea level) or as high as 400 C. Cooling may occur at a variety of temperatures. Cooling temperatures just below the tacky temperature or temperatures as low as refrigeration (4°C) or freezing (-20°C) are possible, depending on the application. Once sufficiently cooled, the coated food product is packaged and shipped.

In one embodiment, the production line operates to produce the food product with high throughput and yield. The speed at which each segment of the production line operates should be selected to achieve a desired yield and throughput. Also, the equipment required to produce the food product with high throughput and yield should be selected accordingly.

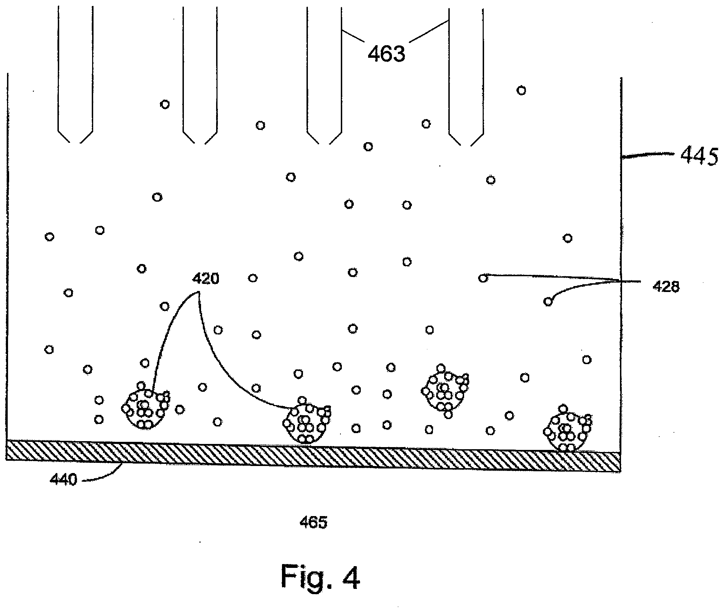

Fig. 4 shows in greater detail a fluidized bed apparatus 465, according to one embodiment of the invention. Air Jets 463 supply temperature controllable air into the chamber. The base 440 may comprise, for example, a conveyor belt.

Particulates are fluidized 428 in the encrusting chamber 445. Air velocity from the nozzles may be controlled by the quantity of air supplied to the nozzles, such that the particulates are kept in a fluidized state, while the heavier prepared cores 420 may bounce or roll on the base 440 of the fluidized bed apparatus. It is preferred to control the air temperature that is supplied to the air nozzles of the encrusting chamber. Since the cores are not fluidized, they do not collide with other cores or the sides of the encrusting chamber at high velocities or frequencies, resulting in less breakage or agglomeration of the cores. This allows for higher yield and quality of food products than conventional particulate coating techniques.

In the encrusting chamber, the particulates collide with the prepared cores and become imbedded in the coating layer. The intense particulate movement ensures a high incidence of contact between particulates and cores, and results in large collision forces to cause the particulates to be firmly imbedded in the coating layer. This process is particularly effective in coating irregularly shaped cores. Moreover, the fluidized particulates are colliding with cores at all angles, allowing the particulates to adhere to portions of an irregularly shaped core that are impossible with previous manufacturing attempts, such as a static or a tumbledrum.

The process parameters and design of the fluidized bed apparatus can be adjusted to accommodate different types of food product designs. In one embodiment, the fluidized bed apparatus comprises at least one air nozzle (not shown) providing an air current with a suitable air velocity. Alternatively, providing more than one air nozzle to adjust air velocities for different sections of the fluidized bed is also useful.

A suitable air velocity is determined by, for example, the relative weights and/or dimensions of the prepared cores and particulates. Typically, there is a difference in weights between the prepared cores and particulates to allow fluidization of the particulates and not the cores in a fluidized bed apparatus.

In one embodiment, when working with prepared cores weighing about 0.81 g per piece that are to be encrusted with a particulate such as granola, air velocity (at nozzle exit) may be set to about 1219 m/min (4000 fpm; feet per minute). Other factors that influence the air velocity include how sticky or slippery the coating layers on the cores are, and the retention time of the cores in the fluidized bed apparatus. The air velocity may vary depending on the application. For example, it may range from about lower than 305 m/min (1000 fpm) to higher than 2743 m/min (9000 fpm). In one particular embodiment, the air velocity is set within the range of about 914 m/min (3000 fpm) to about 1524 m/min (5000 fpm).

The retention time of the cores in the fluidized bed apparatus can be adjusted such that the cores are coated with particulates to the desired level. Preferably, the base piece is substantially encrusted with particulates. The retention time is determined by, for example, the length of the fluidized bed apparatus and the speed of the conveyer belt.

The encrusting temperature, or the temperature of the fluidized bed apparatus, is controlled to maintain the coating layer in a sticky or tacky state to allow particulates to adhere to the cores. The encrusting temperature, in one embodiment, is controlled by adjusting the temperature of the air currents provided by the air jets 463. The encrusting temperature will depend on the type or formulation of the coating compound. In one embodiment, a chocolate compound coating may have granola encrusted at an encrusting temperature of from about 27 °C to about 43 °C (80 °F to 110 °F).

### Example 1

The effectiveness of the present invention was tested by coating compound and encrusting the core with granola. The pre-formed cores comprised a puffed cereal core. The average weight of each food core was about 0.26 grams. The pre-formed cores were coated with a food compound coating comprising Barry Callebaut Milk Snaps # 1829. The cores were coated using an enrober from Sollich. The average weight of each coated food core was about 0.81 grams. The operational parameters of the enrober are listed in Table 1. It should be understood that the blower setting could vary depending on other parameters, such as belt speed and pump speed.

**Table 1.**

| **Process Parameter** | **Specification** |
|---|---|
| Core feed rate into enrober | 182 grams/minute |
| Belt Speed 5.2 m/min | 17 feet per minute (fpm) |
| Pump Speed | 100% |
| Compound Temperature 51.7 °C | 125° F |
| Blower setting (to remove excess compound) | 75% |
| Coated core rate out of enrober | 567 grams/minute |

The coated cores were then encrusted with standard Quaker Oats internally made granola. The granola was stored within a hopper and deposited on a conveyer belt along with the coated cores as they passed into the fluidized bed apparatus. The fluidized bed dryer was then used to encrust the cores with granola. The fluidized bed dryer was a Wolverine Jetzone Fluid Bed Dryer, serial number 8711. The chamber dimensions of the fluidized bed were 6'L x 1.25'W. The operational parameters of the fluidized bed apparatus are listed in Table 2.

**Table 2.**

| **Process Parameter** | **Specification** |
|---|---|
| Coated core feed rate | 567 grams/minute |
| Granola feed rate | 1180 grams/minutes (g/m) |
| Belt speed 3.0 m/min | 10 feet/minute (fpm) |
| Retention time | 36 seconds |
| Air velocity (at nozzle exit) | 4000 fpm |
| Air temperature 30 °C | 86°F |
| Encrusted product output | 1026 grams/minute |
| Excess granola for recycle | 721 grams/minute |

The granola encrusted cores were then passed over a screen. The screen allowed the loose granola to separate from the core. The excess granola that was not encrusted on a coated core was recycled back to the granola feeder for subsequent encrusting of additional coated cores. The granola was recycled at a rate of 721 g/m.

The resulting granola encrusted cores were produced at a rate of 1026 g/m. The average weight of the food product was about 1.29 grams. It was confirmed that by using the process of the present invention, high consistency in the quality of the product pieces would be achieved. For example, the pieces were consistently covered with particulates without any agglomeration of pieces (referred to as doubles). Also, the process resulted in good bond strength between food core and particulates. The process of the present invention achieved high yields with high throughput, resulting in low cost of production.

### Example 2

In another example, a carbohydrate coating was tested for encrusting a core with granola. The pre-formed cores comprised a puffed cereal core. The average weight of each food core was about 0.26 grams. The pre-formed cores were coated with the coating syrup described in Table 3. The cores were coated using a continuous mixing screw conveyor. The syrup was boiled to 110 °C (230 °F) prior to coating food core. The average weight of each coated food core was about 0.78 grams. The operational parameters of the continuous mixer are listed in Table 4. It should be understood that the blower setting could vary depending on other parameters, such as belt speed and pump speed.

**Table 3.**

| **Ingredient** | **Formula %** |
|---|---|
| High fructose corn syrup | 56.78 |
| Corn syrup solids | 17.00 |
| Vegetable shortening | 6.57 |
| Cocoa powder | 4.35 |
| Lecithin | 1.26 |
| Salt | 0.87 |
| Water | 13.04 |
| Chocolate flavor | 0.13 |

**Table 4.**

| **Process Parameter** | **Specification** |
|---|---|
| Core feed rate into mixer | 318 grams/minute |
| Syrup feed rate into mixer | 590 grams/minute |
| Mixer speed | 50% |
| Syrup Temperature 110 °C | 230° F |
| Coated core rate out of mixer | 908 grams/minute |

The coated cores were then encrusted with standard Quaker Oats internally made granola. The granola was stored within a hopper and deposited on a conveyer belt along with the coated cores as they passed into the fluidized bed apparatus. The fluidized bed dryer was then used to encrust the cores with granola. The fluidized bed dryer was a Wolverine Jetzone Fluid Bed Dryer, serial number 8711. The chamber dimensions of the fluidized bed were 12'L x 1.25'W. The operational parameters of the fluidized bed apparatus are listed in Table 5.

| **Process Parameter** | **Specification** |
|---|---|
| Coated core feed rate | 908 grams/minute |
| Granola feed rate | 1471 grams/minutes |
| Belt speed 5.5 m/min | 18 feet/minute (fpm) |
| Retention time | 40 seconds |
| Air velocity (at nozzle exit) | 4000 fpm |
| Air temperature, zone 1 | 200°F 93 °C |
| Air temperature, zone 2 | 230°F 110 °C |
| Encrusted product output | 1355 grams/minute |
| Excess granola for recycle | 1024 grams/minute |

The granola encrusted cores were then passed over a screen. The screen allowed the loose granola to separate from the core. The excess granola that was not encrusted on a coated core was recycled back to the granola feeder for subsequent encrusting of additional coated cores. The granola was recycled at a rate of 1024 g/m.

The resulting granola encrusted cores were produced at a rate of 1355 g/m. The average weight of the food product was about 1.13 g. The resulting granola encrusted core was dried to a moisture content of 7% water (by weight) for a chewy texture, or to a moisture content of 3% water (by weight) for a crunchy texture. It was confirmed that by using the process of the present invention, high consistency in the quality of the product pieces would be achieved. Also, the process resulted in good bond strength between food core and particulates.

## Claims

1. A process of creating a particulate encrusted food core having characteristics that enable the particulates to attach to its surface, comprising: exposing a food core and a plurality of particulates to air currents in a fluidized bed apparatus, wherein the air currents cause the particulates to collide with the food core and adhere, creating a particulate encrusted food core, wherein the food core is heavier than the particulates and the food core is not fluidized.

2. A process of creating a particulate encrusted food core, comprising: exposing a food core and a plurality of particulates to air currents in a fluidized bed apparatus, wherein the air currents cause the particulates to collide with the food core and adhere, creating a particulate encrusted food core; further comprising coating a food core with a coating compound before exposure to the particulates, creating an at least partially coated food core, or coating a particulate with a coating compound before exposure to the food cores, creating an at least partially coated particulate, wherein the food core is heavier than the particulates and the food core is not fluidized.

3. The process of claim 2, wherein the coating occurs within an enrober, a batch mixer, a continuous mixer, a panner, a belt coater, a stringer, or a spray nozzle.

4. The process of claim 2, further comprising heating the coated food core to a temperature sufficient to allow the particulates to adhere to the coated food core, or heating the coated particulates to a temperature sufficient to allow the particulates to adhere to the food core.

5. The process of claim 4, wherein the heating occurs by using heated air currents, or the temperature is above the melting point of the coating compound, preferably wherein the air currents are provided by a fluidized bed dryer.

6. The process of any of claims 2-5, further comprising cooling the particulate encrusted food core to a temperature sufficient to solidify the coating compound.

7. The process of any of claims 1-5, further comprising cooling the particulate encrusted food core to a temperature sufficient to bind and hold particulates to the food core.

8. The process of any of claims 2-7, wherein the coating compound comprises a confectionery coating, chocolate, carbohydrates, hydrocolloids, proteins, or fruits.

9. The process of any of claims 1-8, wherein the particulates are selected from the group consisting of : cereal grains, vegetables, tubers, tree nuts, peanuts, fruits, granola, puffed cereal grains, oat flakes, wheat flakes, cereal flakes, and sugar coated flakes.

10. The process of any of claims 1-9, wherein the food core comprises whole grain cereal.

11. The process of claim 1, further comprising heating the food core to a temperature sufficient to allow the particulates to adhere to the food core, preferably wherein the heating occurs by using heated air currents.

12. A process of creating a particulate encrusted food core, comprising the steps of:
(i) coating a food core or a plurality of particulates with a coating compound;
(ii) heating the food core or the particulates to a temperature sufficient to allow the particulates to adhere to the food core;
(iii) exposing the food core and the particulates to air currents in a fluidized bed apparatus, wherein the air currents cause the food core and the particulates to collide, creating a particulate encrusted food core; and (iv) cooling the particulate encrusted food core, wherein the food core is heavier than the particulates and the food core is not fluidized.

13. The process of claim 12 wherein the exposing step occurs within a fluidized bed dryer, or wherein the coating step occurs within an enrober.

## Patentansprüche

1. Verfahren zur Erzeugung eines mit Teilchen überzogenen Lebensmittelkerns mit Charakteristika, die den Teilchen ermöglichen, sich an seine Oberfläche anzuheften, umfassend: Aussetzen eines Lebensmittelkerns und mehrerer Teilchen gegenüber Luftströmen in einer Wirbelschichtvorrichtung, wobei die Luftströme bewirken, dass die Teilchen mit dem Lebensmittelkern zusammenprallen und anhaften, wodurch ein mit Teilchen überzogener Lebensmittelkern erzeugt wird, wobei der Lebensmittelkern schwerer als die Teilchen ist und der Lebensmittelkern nicht gewirbelt wird.

2. Verfahren zur Erzeugung eines mit Teilchen überzogenen Lebensmittelkerns, umfassend: Aussetzen eines Lebensmittelkerns und mehrerer Teilchen gegenüber Luftströmen in einer Wirbelschichtvorrichtung, wobei die Luftströme bewirken, dass die Teilchen mit dem Lebensmittelkern zusammenprallen und anhaften, wodurch ein mit Teilchen überzogener Lebensmittelkern erzeugt wird; weiterhin umfassend das Beschichten eines Lebensmittelkerns mit einer Beschichtungsverbindung vor dem Aussetzen gegenüber den Teilchen, wodurch ein zumindest zum Teil beschichteter Lebensmittelkern erzeugt wird, oder das Beschichten eines Teilchens mit einer Beschichtungsverbindung vor dem Aussetzen gegenüber den Lebensmittelkernen, wodurch ein zumindest zum Teil beschichtetes Teilchen erzeugt wird, wobei der Lebensmittelkern schwerer als die Teilchen ist und der Lebensmittelkern nicht gewirbelt wird.

3. Verfahren nach Anspruch 2, wobei die Beschichtung innerhalb einer Überziehmaschine, eines Chargenmischers, eines Durchlaufmischers, eines Wäschers, eines Bandbeschichters, eines Stringers oder einer Sprühdüse erfolgt.

4. Verfahren nach Anspruch 2, das weiterhin das Erhitzen des beschichteten Lebensmittelkerns auf eine Temperatur, die dazu ausreicht, die Teilchen an dem beschichteten Lebensmittelkern anhaften zu lassen, oder das Erhitzen der beschichteten Teilchen auf eine Temperatur, die dazu ausreicht, die Teilchen an dem Lebensmittelkern anhaften zu lassen, umfasst.

5. Verfahren nach Anspruch 4, wobei das Erhitzen durch Verwenden erhitzter Luftströme erfolgt oder die Temperatur oberhalb des Schmelzpunkts der Beschichtungsverbindung ist, vorzugsweise wobei die Luftströme von einem Wirbelschichttrockner bereitgestellt werden.

6. Verfahren nach einem der Ansprüche 2-5, das weiterhin das Abkühlen des mit Teilchen überzogenen Lebensmittelkerns auf eine Temperatur, die dazu ausreicht, die Beschichtungsverbindung zu verfestigen, umfasst.

7. Verfahren nach einem der Ansprüche 1-5, das weiterhin das Abkühlen des mit Teilchen überzogenen Lebensmittelkerns auf eine Temperatur, die dazu ausreicht, Teilchen an dem Lebensmittelkern zu binden und zu halten, umfasst.

8. Verfahren nach einem der Ansprüche 2-7, wobei die Beschichtungsverbindung einen Süßwarenüberzug, Schokolade, Kohlenhydrate, Hydrokolloide, Proteine oder Früchte umfasst.

9. Verfahren nach einem der Ansprüche 1-8, wobei die Teilchen aus der Gruppe bestehend aus folgenden ausgewählt sind: Getreidekörner, Gemüse, Knollengewächse, Schalenfrüchte, Erdnüsse, Früchte, Müsli, gepuffte Getreidekörner, Haferflocken, Weizenflocken, Getreideflocken und mit Zucker beschichtete Flocken.

10. Verfahren nach einem der Ansprüche 1-9, wobei der Lebensmittelkern Vollkorngetreide umfasst.

11. Verfahren nach Anspruch 1, das weiterhin das Erhitzen des Lebensmittelkerns auf eine Temperatur, die dazu ausreicht, die Teilchen an dem Lebensmittelkern anhaften zu lassen, umfasst, vorzugsweise wobei das Erhitzen durch Verwenden erhitzter Luftströme erfolgt.

12. Verfahren zur Erzeugung eines mit Teilchen überzogenen Lebensmittelkerns, das die folgenden Schritte umfasst:
(i) Beschichten eines Lebensmittelkerns oder mehrerer Teilchen mit einer Beschichtungsverbindung;
(ii) Erhitzen des Lebensmittelkerns oder der Teilchen auf eine Temperatur, die dazu ausreicht, die Teilchen an dem Lebensmittelkern anhaften zu lassen;
(iii) Aussetzen des Lebensmittelkerns und der Teilchen gegenüber Luftströmen in einer Wirbelschichtvorrichtung, wobei die Luftströme bewirken, dass der Lebensmittelkern und die Teilchen zusammenprallen und anhaften, wodurch ein mit Teilchen überzogener Lebensmittelkern erzeugt wird; und
(iv) Abkühlen des mit Teilchen überzogenen Lebensmittelkerns, wobei der Lebensmittelkern schwerer als die Teilchen ist und der Lebensmittelkern nicht gewirbelt wird.

13. Verfahren nach Anspruch 12, wobei der Aussetzungsschritt in einem Wirbelschichttrockner erfolgt oder wobei der Beschichtungsschritt in einer Überziehmaschine erfolgt.

## Revendications

1. Procédé pour créer un noyau central d'un aliment incrusté de particules comportant des caractéristiques permettant aux particules d'adhérer à sa surface, consistant à : exposer un noyau central d'un aliment et une pluralité de particules à des courants d'air dans un appareil à lit fluidisé, dans lequel les courants d'air induisent les particules à entrer en collision avec le noyau central d'un aliment et à y adhérer, créant un noyau central d'un aliment incrusté de particules, dans lequel le noyau central d'un aliment pèse plus que les particules et le noyau central d'un aliment n'est pas fluidisé.

2. Procédé pour créer un noyau central d'un aliment incrusté de particules, consistant à : exposer un noyau central d'un aliment et une pluralité de particules à des courants d'air dans un appareil à lit fluidisé, dans lequel les courants d'air induisent les particules à entrer en collision avec le noyau central d'un aliment et à y adhérer, créant un noyau central d'un aliment incrusté de particules ; consistant en outre à revêtir un noyau central d'un aliment d'un produit de revêtement avant de l'exposer aux particules, créant un noyau central d'un aliment au moins partiellement revêtu, ou à revêtir une particule d'un produit de revêtement avant de l'exposer aux noyaux centraux d'aliments, créant une particule au moins partiellement revêtue, dans lequel le noyau central d'un aliment pèse plus que les particules et le noyau central d'un aliment n'est pas fluidisé.

3. Procédé selon la revendication 2, dans lequel le revêtement a lieu dans une enrobeuse, un mélangeur de lots, un mélangeur continu, une emmouleuse, une enduiseuse, une assembleuse, ou une buse de pulvérisation.

4. Procédé selon la revendication 2, consistant en outre à chauffer le noyau central d'un aliment revêtu à une température suffisante pour permettre aux particules d'adhérer au noyau central d'un aliment revêtu, ou chauffer les particules revêtues à une température suffisante pour permettre aux particules d'adhérer au noyau central d'un aliment.

5. Procédé selon la revendication 4, dans lequel le chauffage a lieu en utilisant des courants d'air chauds, ou la température dépasse le point de fusion du produit de revêtement, de préférence dans lequel les courants d'air proviennent d'un sécheur à lit fluidisé.

6. Procédé selon l'une quelconque des revendications 2 à 5, consistant en outre à refroidir le noyau central d'un aliment incrusté de particules à une température suffisante pour solidifier le produit de revêtement.

7. Procédé selon l'une quelconque des revendications 1 à 5, consistant en outre à refroidir le noyau central d'un aliment incrusté de particules à une température suffisante pour lier les particules et les faire adhérer au noyau central d'un aliment.

8. Procédé selon l'une quelconque des revendications 2 à 7, dans lequel le produit de revêtement comprend du revêtement pour confiserie, du chocolat, des glucides, des hydrocolloïdes, des protéines, ou des fruits.

9. Procédé selon l'une quelconque des revendications 1 à 8, dans lequel les particules sont sélectionnées dans le groupe comprenant : des grains céréaliers, des légumes, des tubercules, des noix, des cacahuètes, des fruits, du granola, des grains céréaliers soufflés, des flocons d'avoine, des flocons de blé, des flocons de céréales et des flocons enrobés de sucre.

10. Procédé selon l'une quelconque des revendications 1 à 9, dans lequel le noyau central d'un aliment comprend des céréales à grains entiers.

11. Procédé selon la revendication 1, consistant en outre à chauffer le noyau central d'un aliment à une température suffisante pour permettre aux particules d'adhérer au noyau central d'un aliment, de préférence dans lequel le chauffage a lieu en utilisant des courants d'air chauds.

12. Procédé pour créer un noyau central d'un aliment incrusté de particules, le procédé comprenant les étapes consistant à :
(i) revêtir un noyau central d'un aliment ou une pluralité de particules d'un produit de revêtement ;
ii) chauffer le noyau central d'un aliment ou les particules à une température suffisante pour permettre aux particules d'adhérer au noyau central d'un aliment ;
(iii) exposer le noyau central d'un aliment et les particules à des courants d'air dans un appareil à lit fluidisé, dans lequel les courants d'air induisent le noyau central d'un aliment et les particules à entrer en collision, créant un noyau central d'un aliment incrusté de particules ; et (iv) refroidir le noyau central d'un aliment incrusté de particules, dans lequel le noyau central d'un aliment pèse plus que les particules et le noyau central d'un aliment n'est pas fluidisé.

13. Procédé selon la revendication 12, dans lequel l'étape d'exposition a lieu dans un sécheur à lit fluidisé, ou dans lequel l'étape de revêtement a lieu dans une enrobeuse.
